# EUROPÄISCHE PATENTSCHRIFT

(11) **EP 4 138 238 B1**
(45) Veröffentlichungstag und Bekanntmachung des Hinweises auf die Patenterteilung: **20.03.2024**
(21) Anmeldenummer: 22175326.2
(22) Anmeldetag: 25.05.2022
(51) Int. Cl.: H02G 1/08, G02B 6/44

(54) **KABELZUGHILFE**
CABLE TRACTION AID
AIDE AU TIRAGE DE CÂBLES

(30) Priorität: 17.08.2021 DE 102021121284
(43) Veröffentlichungstag der Anmeldung: 22.02.2023
(73) Patentinhaber: MD Elektronik GmbH, 84478 Waldkraiburg (DE)
(72) Erfinder: Mirz, Sebastian, 84559 Kraiburg am Inn (DE); Haas, Alexander, 84453 Mühldorf am Inn (DE)

(56) Entgegenhaltungen:
- KR-A- 20120 054 200
- US-A- 2 607 095
- US-A- 4 458 880

## Beschreibung

### Technisches Gebiet

Die Erfindung betrifft eine Kabelzughilfe zum Ausrichten eines gehaltenen Kabels in einer Zugrichtung, mit einem Gehäuse und einem Griffteil.

### Stand der Technik

Aus der Praxis der Kabelbearbeitung sind Kabelzughilfen bekannt. Bei einer Kabelzughilfe handelt sich um ein Handgerät, das ein Bediener verwendet, um ein Kabel, insbesondere ein Ende eines Kabels, zu fassen und in einer gefassten Stellung zu halten, so dass durch Aufbringen einer Zugkraft, die üblicherweise in Richtung der Erstreckung des gehaltenen Kabels gerichtet ist, das gehaltene Kabel straff und in eine definierte Richtung ausgerichtet gehalten werden kann, um das Kabel bzw. das Kabelende weiter bearbeiten zu können.

Bei der Bedienung der Kabelzughilfe werden auf das gehaltene Kabel Kräfte ausgeübt, sei es in Längsrichtung, also Richtung der Erstreckung des Kabels, so dass das Kabel auf Zug beansprucht wird, sei es quer zu der Längsrichtung bei dem Halten des Kabels. Die auf das Kabel ausgeübten Kräfte des Bedieners können insbesondere bei Datenkabeln, die einen wesentlichen komplizierten inneren Aufbau aufweisen als Leistungskabel, zu einer Beschädigung des Kabels führen, insbesondere können bei Hochfrequenz (HF-)Datenkabeln die HF-Eigenschaften des Datenkabels beeinträchtigt und das Datenkabel ggf. so weit beschädigt werden, dass das Kabel nicht mehr verwendet werden kann. Bei der Verarbeitung von insbesondere HF-Datenkabeln sind daher maximale Zugkräfte vorgegeben, die bei der Verarbeitung und insbesondere beim Verbau des Kabels nicht überschritten werden dürfen.

KR 20120054200 A beschreibt eine Kabelzughilfe zum Ausrichten eines gehaltenen Kabelendes in einer Zugrichtung, wobei die Kabelzughilfe ein Gehäuse sowie ein als Abschnitt des Gehäuses ausgebildetes, mit dem übrigen Gehäuse einstückiges Griffteil umfasst, wobei das Kabel an dem Gehäuse geführt wird, und wobei ein betätigbarer Hebel vorgesehen ist, mit dem das Kabel gegen das Gehäuse verspannt werden kann, um das Kabel zu halten. Übt der Bediener der Kabelzughilfe über das Griffteil eine zu hohe Zugkraft auf das Kabel aus, kann das Kabel beschädigt werden.

### Beschreibung der Erfindung

Es ist eine Aufgabe der Erfindung, eine Kabelzughilfe anzugeben, die eine gegenüber zu hohen Zugkräften sichere Handhabung und Montage des Kabels ermöglicht.

Diese Aufgabe wird für die Kabelzughilfe, die ein Gehäuse und ein Griffteil umfasst, erfindungsgemäß dadurch gelöst, dass an dem Gehäuse ein Exzenter mit einem exzentrisch gelagerten Klemmkörper angeordnet ist, um in einer Klemmstellung das Kabel gegen das Gehäuse verspannt zu klemmen, wobei in der Klemmstellung das Griffteil in Bezug auf das Gehäuse zwischen einer Arbeitsstellung und einer Warnstellung verschiebbar angeordnet ist, und wobei in der Warnstellung ein Warnsignal generiert wird, sobald eine definierte Kraft in Zugrichtung überschritten wird.

Das Klemmen des Kabels, insbesondere eines Kabelendes des Kabels, in der Klemmstellung gegen das Gehäuse durch den exzentrisch gelagerten Klemmkörper des Exzenters ermöglicht eine Einleitung der Zugkraft seitlich auf das Kabel bzw. auf das Kabelende; insbesondere wird ein fehlerhaftes Greifen oder Ziehen des Kabels an einem Steckergehäuse unterbunden. Der Exzenter mit dem exzentrisch gelagerten Klemmkörper bilden eine Einheit, die austauschbar ausgebildet sein kann und auf die jeweilige Art des Kabels, insbesondere den Durchmesser des Kabels, angepasst werden kann. Der Klemmkörper kann beispielsweise eine äußere Kontur aufweisen, die auf den Durchmesser des Kabels abgestimmt ist.

Die Verschiebbarkeit des Griffteils in Bezug auf das Gehäuse in der Klemmstellung zwischen einer Arbeitsstellung und einer Warnstellung ermöglicht eine Reduzierung der Krafteinleitung, insbesondere der Zugkraft, für den Fall, dass eine maximale Zugkraft kurzzeitig überschritten wird, da die Kraft dann für eine kurze Zeit nicht unmittelbar auf das Kabel einwirkt.

Die Generierung eines Warnsignals in der Warnstellung des Griffteils in Bezug auf das Gehäuse gibt dem Bediener ein Signal, die Zugkraft herabzusetzen, so dass, auch über die kurze Zeitspanne der Verschiebung des Griffteils zwischen der Arbeitsstellung und der Warnstellung hinaus, die weitere Bearbeitung mit einer verminderten Zugkraft erfolgen kann.

Vorzugsweise ist vorgesehen, dass das Griffteil gegen die Vorspannung eines Federelements verschiebbar ist. Das Federelement kann das Griffteil aus der Warnstellung in die Arbeitsstellung zurückführen, sobald die vorgegebene maximale Zugkraft wieder unterschritten wird.

Für das Federelement ist vorzugsweise vorgesehen, dass die Vorspannung des Federelements einstellbar ist. Durch die Einstellbarkeit der Vorspannung lässt sich die Kabelzughilfe für verschiedene, vorgegebene maximale Zugkräfte einstellen.

Das Federelement kann vorzugsweise als Schraubendruckfeder, alternativ hierzu als Tellerfeder oder als Schenkelfeder, ausgebildet sein.

Für das Federelement ist vorzugsweise vorgesehen, dass die Kabelzughilfe einen Mitnehmer umfasst, der mit dem Griffteil fest verbunden ist, und dass das Federelement auf den Mitnehmer einwirkt.

Für den Mitnehmer ist vorzugsweise vorgesehen, dass der Mitnehmer in dem Gehäuse, insbesondere zwischen einem Gehäusedeckel und einem Gehäuseboden, angeordnet ist. Der Mitnehmer kann insbesondere durch Bohrungen, speziell durch Langlöcher, in dem Gehäuse bzw. in dem Gehäusedeckel eines Gehäuseabschnitts starr mit dem Griffteil verbunden sein, wobei die Endpunkte der Langlöcher der Arbeitsstellung bzw. der Warnstellung des Griffteils in Bezug auf das Gehäuse entsprechen. Eine starre Verbindung des Griffteils mit dem Mitnehmer kann beispielsweise durch Zapfen ausgebildet werden, die durch die Langlöcher in dem Gehäusedeckel bzw. in dem Gehäuse greifen.

Für den Mitnehmer ist vorzugsweise weiter vorgesehen, dass der Mitnehmer einen Mikroschalter betätigt oder freigibt, um das Warnsignal zu generieren.

Für die Kabelzughilfe ist weiter vorzugsweise vorgesehen, dass die Kabelzughilfe einen Signalgeber umfasst, der innerhalb des Gehäuses angeordnet ist, und wobei der Signalgeber das Warnsignal generiert. Der Signalgeber kann dabei ein akustisches, optisches oder haptisches Signal erzeugen.

Für die Kabelzughilfe ist vorzugsweise weiter vorgesehen, dass der exzentrisch gelagerte Klemmkörper an einer Außenseite des Gehäuses mittels einer Exzenterfeder gegen einen Wandabschnitt des Gehäuses beaufschlagt ist. Der Klemmkörper kann insbesondere als federbeaufschlagte Pendelbacke ausgebildet sein und als austauschbarer Wechseleinsatz vorgesehen sein, so dass verschiedene Kabel mit abweichenden Durchmessern von der Kabelzughilfe gehalten werden können.

Weitere Vorteile und Merkmale der Erfindung ergeben sich aus den abhängigen Ansprüchen sowie aus der nachfolgenden Beschreibung eines Ausführungsbeispiels einer erfindungsgemäßen Kabelzughilfe.

Die Erfindung wird im Folgenden unter Bezugnahme auf die anliegende Zeichnung näher beschrieben und erläutert.
- Fig. 1: zeigt eine perspektivische Ansicht eines Ausführungsbeispiels einer erfindungsgemäßen Kabelzughilfe in einer Klemmstellung und in einer Arbeitsstellung, aus einer ersten Blickrichtung,
- Fig. 2: zeigt eine perspektivische Ansicht der Kabelzughilfe aus Fig. 1, aus einer zweiten Blickrichtung,
- Fig. 3: zeigt eine ausschnittsweise Vergrößerung der Kabelzughilfe aus Fig. 2,
- Fig. 4: zeigt eine ausschnittsweise Vergrößerung der Kabelzughilfe aus Fig. 3, in einer Warnstellung,
- Fig. 5: zeigt eine perspektivische Ansicht der Kabelzughilfe aus Fig. 2, in einer Arbeitsstellung, und
- Fig. 6: zeigt eine perspektivische Ansicht der Kabelzughilfe auf Fig. 5, in einer Warnstellung.

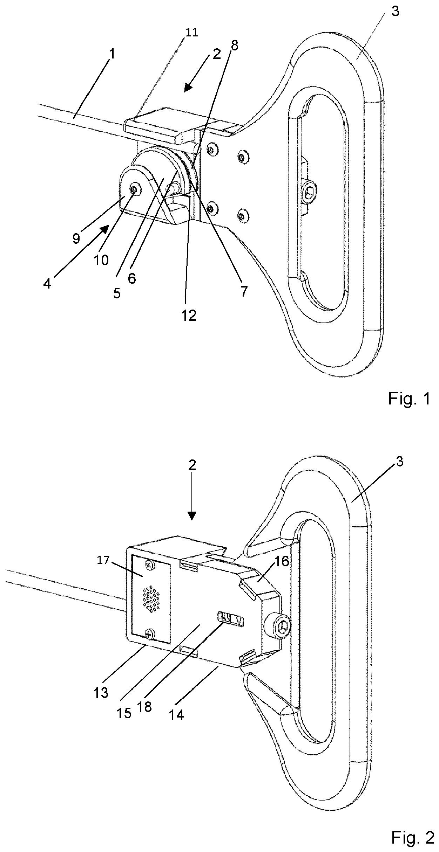

Fig. 1 zeigt eine Kabelzughilfe, mit der ein Kabel, nämlich ein Endabschnitt eines Kabelendes 1, von einem menschlichen Bediener gehalten und durch Anwenden einer Zugkraft in eine Zugrichtung gestreckt ausgerichtet werden kann. Die Zugrichtung entspricht dabei der Richtung der Längserstreckung des gestreckt ausgerichteten Kabels.

Die Kabelzughilfe umfasst ein Gehäuse 2 sowie ein Griffteil 3, an dem der Bediener die Kabelzughilfe ergreifen kann.

Die Kabelzughilfe umfasst weiter einen an der Außenseite des Gehäuses 2 angeordneten Exzenter 4. Der Exzenter 4 umfasst eine Klemmkörper 5, der einen im Wesentlichen bogenförmigen, insbesondere auch kreissektor-förmigen Umriss aufweist und an dessen Außenkante 6 eine reibungsmindernde Beschichtung 7, beispielsweise ein Kunststoff, in einer Nut 8 angeordnet ist. Die Abmessungen der Nut 8, insbesondere eine Tiefe der Nut 8 sowie ein Öffnungswinkel der Flanken der Nut 8, sind auf den Abschnitt des Kabelendes 1, insbesondere auf einen Durchmesser des Kabels, abgestimmt.

Der Klemmkörper 5 des Exzenters 4 ist bezogen auf einen Mittelpunkt des Klemmkörpers 5 exzentrisch an dem Gehäuse 2 gelagert, so dass ein Drehpunkt des Klemmkörpers 5 an dem Gehäuse 2 in Bezug auf den Mittelpunkt des Klemmkörpers 5 versetzt angeordnet ist. Hierzu ist in einem abgewinkelten Vorsprung 9 des Gehäuses 2 ein Lagerzapfen 10 vorgesehen, der eine Schwenkung des Klemmkörpers 5 ermöglicht. Dem abgewinkelten Vorsprung 9 des Gehäuses 2 gegenüberliegend ist an dem Gehäuse 2 ein Anschlagabschnitt 11 vorgesehen, der die Schwenkung des Klemmkörpers 5 um die Achse des Lagerzapfens 10 begrenzt. Der Klemmkörper 5 des Exzenters 4 ist mittels einer Exzenterfeder 12, die als Schlingfeder ausgebildet ist, gegen den Anschlagabschnitt 11 des Gehäuses 2 vorgespannt. Insbesondere ist in Fig. 1 erkennbar, dass der exzentrisch gelagerte Klemmkörper 5 an einer Außenseite des Gehäuses 2 mittels der Exzenterfeder 12 gegen einen Wandabschnitt des Gehäuses 2, nämlich gegen den Anschlagabschnitt 11 des Gehäuses 2, mechanisch beaufschlagt ist.

An einer dem Klemmkörper 5 des Exzenters 4 gegenüberliegenden Fläche weist der Anschlagabschnitt 11 des Gehäuses 2 eine bildlich nicht erkennbare weitere reibungsmindernde Beschichtung auf; diese Beschichtung an dem Anschlagabschnitt 11 kann innerhalb einer Nut an der auf den Klemmkörper 5 weisenden Fläche des Anschlagabschnitts 11 oder unmittelbar auf der ebenen Fläche des Anschlagabschnitts 11 angeordnet sein.

Die Drehachse des Lagerzapfens 10 weist zu der Fläche des Anschlagabschnitts 11 einen Abstand quer zu der Richtung der Längserstreckung des Kabels auf. Wird in Richtung der Längserstreckung des Kabels eine Zugkraft auf die Kabelzughilfe ausgeübt, indem der Bediener an dem Griffteil 3 im Wesentlichen in Richtung des Kabels zieht, wird auf den Klemmkörper 5 des Exzenters 4 ein Drehmoment ausgeübt. Das Drehmoment übt auf das Kabelende 1 eine Kraft quer zu der Richtung der Längserstreckung des Kabels auf, so dass das Kabel gegen den Anschlagabschnitt 11 des Gehäuses 2 gedrückt wird, und so dass das Kabelende 1 durch den Exzenter 4 gegen das Gehäuse 2 verspannt, also unter zusätzlicher Einwirkung der Vorspannung der Exzenterfeder 12, geklemmt wird. Diese Andrückkraft auf das Kabelende 1 gegen den Anschlagabschnitt 11 des Gehäuses 2 ist umso größer, je stärker der Bediener an dem Griffteil 3 zieht, also je größer die Krafteinleitung in Längsrichtung des Kabels ist.

Im Betrieb wird das Kabelende 1 zwischen den Klemmkörper 5 und dem Anschlagabschnitt 11 des Gehäuses eingefädelt und durch die Exzenterfeder 12 unter einer leichten Vorspannung gegen den Anschlagabschnitt 11 des Gehäuses gedrückt gehalten, so dass das Kabelende in dem Exzenter 4 vorfixiert und gegriffen wird. Anschließend zieht der Bediener an dem Griffteil 3 in einer Zugrichtung, also in einer gedachten Verlängerung der Richtung der Erstreckung des Kabels, so dass wird eine Zugkraft über das Griffteil 3 in den Exzenter 4 an der Außenseite des Gehäuses 2 eingeleitet wird, wobei die Zugkraft bewirkt, dass das Kabelende 1 in einer Klemmstellung gegen den Anschlagabschnitt 11 des Gehäuses 2 verspannt und damit geklemmt wird.

In dieser Klemmstellung lässt sich das Kabel weiter bearbeiten, so lange die Zugkraft geringer als eine maximale Zugkraft ist.

Der Exzenter 4, mindestens aber der Klemmkörper 5 des Exzenters 4 ist als auswechselbare Baueinheit ausgebildet, die ausgetauscht werden kann, wenn ein Kabel mit abweichenden Eigenschaften, insbesondere mit einem abweichenden Kabeldurchmesser, bearbeitet werden soll.
Fig. 1 zeigt die Kabelzughilfe in einer Blickrichtung von außen auf die Oberseite des Gehäuses 2, an dessen Außenseite der Exzenter 4 angeordnet ist.
Fig. 2 zeigt die Kabelzughilfe in einer Blickrichtung auf die Unterseite des Gehäuses 2. Fig. 2 lässt erkennen, dass das Gehäuse 2 zweiteilig ausgebildet ist und einen ersten Gehäuseabschnitt 13 sowie einen zweiten Gehäuseabschnitt 14 umfasst, die sich einen gemeinsame Gehäuseboden 15 teilen.

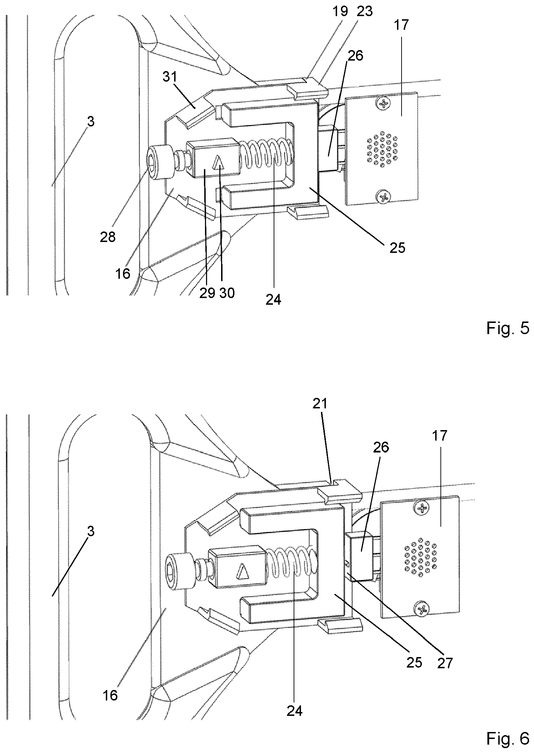

Der erste Gehäuseabschnitt 13 ist geschlossen ausgebildet und weist an seiner Außenseite den Exzenter 4 (Fig. 1) auf. Der zweite Gehäuseabschnitt 14 ist zu der dem Griffteil 3 zugewandten Seite hin offen, so dass im Bereich des zweiten Gehäuseabschnitts 14 ein Gehäusedeckel 16 vorgesehen ist, der mittels umgelegter Laschen 31 (Fig. 5) an dem Gehäuseboden 15 befestigt ist und der den zweiten Gehäuseabschnitt 14 zu dem Griffteil 3 hin abschließt. Insbesondere ist das Griffteil 3 außen auf dem Gehäuse 2, nämlich auf der Außenseite des Gehäusedeckels 16 im Bereich des zweiten Gehäuseabschnitts 14, angeordnet. Dabei ist das Gehäuse 2 abschnittsweise durch den Gehäusedeckel 16 verschlossen, weiter ist, wie unten näher erläutert wird, das Griffteil 3 abschnittsweise auf dem Gehäuse 2, insbesondere auf dem Gehäusedeckel 16 gleitend geführt.

Im Bereich des ersten Gehäuseabschnitts 13 ist in dem Gehäuseboden 15 eine Abdeckplatte 17 angeordnet, die eine Öffnung in dem Gehäuseboden 15 verschließt; innerhalb der Abdeckplatte 17 ist ein Durchbruch in Form einer Perforierung vorgesehen, durch den akustische Warnsignale eines Signalgebers gelangen, wobei der Signalgeber in dem ersten Gehäuseabschnitt 13 des Gehäuses 2 angeordnet ist.

Im Bereich des zweiten Gehäuseabschnitts 14 ist in dem Gehäuseboden 15 ein Sichtfenster 18 ausgespart, das einen Blick auf eine Markierung 30 (Fig. 5) freigibt, wobei die Markierung 30 zusammen mit einer ablesbaren Skala die einstellbare definierte Kraft in Zugrichtung, bei dem dargestellten Ausführungsbeispiel die einstellbare maximale Zugkraft angibt, bei deren Erreichen das Griffteil 3 bezogen auf das Gehäuse 2, insbesondere auch in Bezug auf den zweiten Gehäuseabschnitt 14, von einer Arbeitsstellung in eine Warnstellung übergeht.

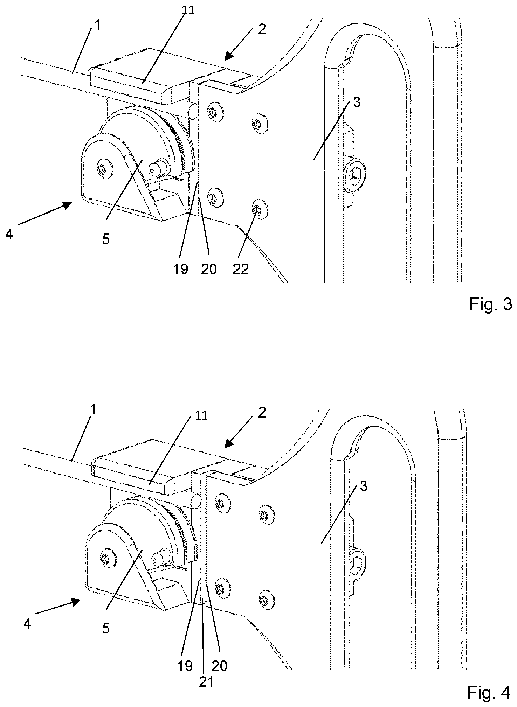

Fig. 3 und Fig. 4 zeigen jeweils ausschnittsweise eine Blickrichtung entsprechend Fig. 1 auf die Oberseite der Kabelzughilfe, jeweils in einer Klemmstellung, also in einer Stellung des Exzenters 4 in Bezug auf das Gehäuse 2, bei der der Klemmkörper 5 des Exzenters 4 bei Anliegen einer Zugkraft in Zugrichtung das Kabelende 1 gegen den als Anschlagabschnitt 11 ausgebildeten Abschnitt des Gehäuses 2 drückt und verspannt, so dass das Kabel mittels der Kabelzughilfe gestreckt ausgerichtet gehalten ist.

Fig. 3 zeigt die Kabelzughilfe in einer Arbeitsstellung, die das Gehäuse 2 und das Griffteil 3 zueinander einnehmen, solange die definierte Kraft in Zugrichtung, nämlich die maximal zulässige Zugkraft in Zugrichtung, unterschritten ist. Es ist erkennbar, dass eine Hinterkante 19 des ersten Gehäuseabschnitts 13 unmittelbar an einer Vorderkante 20 des Griffteils 3 anliegt.

Fig. 4 zeigt die Kabelzughilfe in einer Warnstellung, die das Gehäuse 2 und das Griffteil 3 zueinander einnehmen, sobald die definierte Kraft in Zugrichtung, in dem Ausführungsbeispiel die maximal zulässige Zugkraft in Zugrichtung, erreicht und überschritten ist. Es ist in Vergleich zu der Darstellung aus Fig. 3 erkennbar, dass zwischen der Hinterkante 19 des ersten Gehäuseabschnitts 13 und der Vorderkante 20 des Griffteils ein Spalt 21 ausgebildet ist. Die Ausbildung des Spalts 21 wird dadurch ermöglicht, dass in der Klemmstellung das Griffteil 3 in Bezug auf das Gehäuse 2 zwischen der Arbeitsstellung (Fig. 3) und der Warnstellung (Fig. 4) verschiebbar an dem Gehäuse 2, insbesondere an dem Gehäusedeckel 16 (Fig. 2) angeordnet ist.

Um die Verschiebbarkeit des Griffteils 3 an dem Gehäuse 2, insbesondere an dem Gehäusedeckel 16 des zweiten Gehäuseabschnitts 14 zu ermöglichen, sind an dem Gehäuse 2, insbesondere an dem Gehäusedeckel 16, zwei parallele Langlöcher vorgesehen, durch die das Griffteil 3 mit je zwei Stiftpaaren greift, wobei die zwei Stifte eines jeden Stiftpaars in Zugrichtung beabstandet ausgebildet sind. Das jeweilige Langloch ist parallel zu der Zugrichtung ausgebildet. In der Arbeitsstellung ist der jeweils vordere Stift der Stiftpaare an dem in Bezug auf den ersten Gehäuseabschnitt 13 vorderen Ende des Langlochs angeordnet, in der Warnstellung ist der jeweils hintere Stift der Stiftpaare an dem in Bezug auf den ersten Gehäuseabschnitt 13 hinteren Ende des Langlochs angeordnet. Die Anordnung des jeweiligen Langlochs parallel zu der Zugrichtung stellt sicher, dass ein Krafteintrag über das Griffteil 3 mit einer Komponente quer zu der Zugrichtung von dem Gehäusedeckel 16 bzw. von dem Gehäuse 2 aufgenommen wird und nicht in den Bereich des Exzenters 4 gelangt. Die Langlöcher sowie die in den Langlöchern geführten Stiftpaare sind bildlich nicht erkennbar, allerdings ist in Fig. 3 ein an dem Griffteil 3 festgelegter Endabschnitt eines der beiden hinteren Stiftpaare mit dem Bezugszeichen ,22` ausgewiesen.

Um die Verschiebbarkeit des Griffteils 3 an dem Gehäuse 2, insbesondere an dem Gehäusedeckel 16 zu vereinfachen, ist weiter vorgesehen, dass das Gehäuse 2 abschnittsweise, an der zu dem Griffteil 3 weisenden Seite, durch den Gehäusedeckel 16 verschlossen ist, und dass das Griffteil 3 abschnittsweise auf dem Gehäusedeckel 16 gleitend geführt ist.

Wie weiter unten, anhand von Fig. 5 und 6 näher erläutert, wird in der Warnstellung ein Warnsignal generiert, sobald die definierte Kraft in Zugrichtung, in dem Ausführungsbeispiel die vorgegebene maximal zulässige Zugkraft in Zugrichtung, überschritten wird.

Fig. 5 und Fig. 6 zeigen die Kabelzughilfe jeweils in der Klemmstellung, bei der der exzentrisch gelagerte Klemmkörper des Exzenters das Kabelende gegen das Gehäuse verspannt klemmt, in einer Ansicht von unten, entsprechend Fig. 2; dabei ist von dem Gehäuse jeweils nur der Gehäusedeckel 16 sowie der Endabschnitt, an dem die Hinterkante 19 des ersten Gehäuseabschnitts angeordnet ist, abgebildet und die übrigen Bestandteile des Gehäuses fortgelassen.

Fig. 5 zeigt das Griffteil 3 in Bezug auf das Gehäuse in der Arbeitsstellung, Fig. 6 in der Warnstellung unter Ausbildung des Spaltes 21.

In dem Gehäuse, insbesondere zwischen dem Gehäuseboden und dem Gehäusedeckel 16, ist ein Federelement 24 angeordnet, so dass das Griffteil 3 gegen die Vorspannung eines Federelements 24 in Bezug auf das Gehäuse verschiebbar ist. Das Federelement 24 ist dabei als Schraubendruckfeder ausgebildet, in einer Abwandlung des Ausführungsbeispiels könnte das Federelement 24 auch als Schraubenzugfeder, als Tellerfeder, als Federkissen oder als ein anderes elastisches Element, ausgebildet sein.

Das Griffteil 3 ist mit einem Mitnehmer 25 fest verbunden, dabei ist der Mitnehmer 25 in dem Gehäuse, nämlich zwischen dem Gehäusedeckel 16 und dem Gehäuseboden, angeordnet. Das Federelement 24 wirkt auf den Mitnehmer 25 ein.

Der Mitnehmer 25 ist als im Wesentlichen U-förmiges Teil ausgebildet, wobei die Stifte, mittels derer das Griffteil 3 in den beiden parallelen und zu der Zugrichtung parallel ausgerichteten Langlöchern in den Gehäusedeckel 16 geführt ist, an den beiden Schenkeln des U des Mitnehmers 25 befestigt sind. Die beiden Stifte eines der beiden Stiftpaare sind dabei an jeweils einem Schenkel des U des Mitnehmers 25 befestigt, so dass der Mitnehmer 25 der Bewegung des Griffteils 3 relativ zu dem Gehäuse durch die Langlöcher in dem Gehäusedeckel 16 folgen kann.

Das Federelement 24 wirkt dabei auf den Mitnehmer 25 ein, insbesondere ist ein Angriffspunkt des Federelements 24 auf den Boden des U des Mitnehmers 25 auf der Seite des Mitnehmers 25 angeordnet, der zwischen den beiden Schenkeln des U ausgebildet ist. Die gegenüberliegende Seite an dem Boden des U des Mitnehmers 25 wirkt mit einem Mikroschalter 26 zusammen, so dass der Mitnehmer 25 den Mikroschalter 26 betätigt oder freigibt, um das Warnsignal zu generieren, wenn das Griffteil 3 in Bezug auf das Gehäuse von der Arbeitsstellung in die Warnstellung gegen die Vorspannung des Federelements 24 verschoben wird. In dem dargestellten Ausführungsbeispiel liegt in der Arbeitsstellung, so lange die definierte Kraft, nämlich die vorgegebene maximale Zugkraft in Zugrichtung, unterschritten ist, der Mitnehmer 25 an dem Mikroschalter 26 an, so dass kein Warnsignal generiert wird (Fig. 5). Wird die die vorgegebene maximale Zugkraft in Zugrichtung erreicht oder überschritten, kommt der Mitnehmer 25 außer Anlage zu dem Mikroschalter 26, so dass ein Luftspalt 27 (Fig. 6) ausgebildet wird, wobei in dieser Warnstellung das Warnsignal generiert wird.

In einer Abwandlung des dargestellten Ausführungsbeispiels kann vorgesehen sein, dass nicht das Freigeben des Mikroschalters, sondern das Betätigen des Mikroschalters, beispielsweise das Niederdrücken eines Schalters oder Knopfes oder das Betätigen des Mikroschalters durch ein Schließen eines elektronischen Kreises, in der Warnstellung das Warnsignal generiert.

Die Kabelzughilfe umfasst weiter einen Signalgeber, der innerhalb des Gehäuses, in dem dargestellten Ausführungsbeispiels innerhalb des ersten Gehäuseabschnitts, angeordnet ist und als akustischer Signalgeber ausgebildet ist, der ein akustisches Warnsignal gibt, sobald das Griffteil 3 in die Warnstellung übergeht. Der akustische Signalgeber sowie eine Leistungsversorgung für den Signalgeber, beispielsweise eine Batterie, sind in der Darstellung von Fig. 5 und Fig. 6 durch die Abdeckplatte 17 verdeckt; die Perforierung in der Abdeckplatte 17 ermöglicht ein Austreten des akustischen Warnsignals in der Warnstellung des Griffteils 3. In einer Abwandlung des dargestellten Ausführungsbeispiels kann der Signalgeber als optischer Signalgeber ausgebildet sein, der ein optisches Warnsignal generiert. In einer weiteren Abwandlung des dargestellten Ausführungsbeispiels kann der Signalgeber ein haptisches, also in dem Griffteil 3 des Bedieners fühlbares Warnsignal, generieren. Es versteht sich, dass mehr als ein Signalgeber vorgesehen sein kann, oder dass der mindestens eine Signalgeber Warnsignale verschiedener Art gleichzeitig, beispielsweise sowohl ein optisches als auch ein akustisches Warnsignal, generieren kann, wenn das Griffteil 3 in die Warnstellung verschoben wird.

Die Vorspannung des Federelements 24, gegen die das Griffteil 3 von der Arbeitsstellung in die Warnstellung verschiebbar ist, ist einstellbar.

Fig. 5 zeigt eine Stellschraube 28, die indirekt an dem Gehäuse abgestützt ist und die von dem Bediener betätigt werden kann. Die Betätigung der Stellschraube 28 verschiebt einen Stößel 29, an dem eine Markierung 30 angebracht ist, die durch das Sichtfenster 18 (Fig. 2) erkennbar und ablesbar ist. An dem Ende des Stößels 29 ist einer der beiden Endpunkte des Federelements 24 angeordnet, so dass eine Betätigung der Stellschraube 28 durch eine Verschiebung des Stößels 29 das Ausmaß der Stauchung des als Schraubendruckfeder ausgebildeten Federelements 24 beeinflusst. Damit ist die Vorspannung des Federelements 24 einstellbar, mittelbar also auch die Zugkraft in Zugrichtung, die der Bediener an dem Griffteil 3 anbringen muss, um den Mitnehmer 25 außer Anlage mit dem Mikroschalter 26 zu bringen, so dass durch das Freigeben des Mikroschalters 26 das Warnsignal generiert wird, wenn das Griffteil 3 in Bezug auf das Gehäuse von der Arbeitsstellung in die Warnstellung verschoben wird.

Es versteht sich, dass mittels der Stellschraube 28 die Vorspannung des Federelements 24 zwischen dem Mitnehmer 25, an dem das Griffteil 3 befestigt ist, und der an dem Gehäuse abgestützten Stellschraube 28 so eingestellt werden kann, dass das Warnsignal von dem Signalgeber dann ausgelöst wird, wenn die vorgegebene maximale Zugkraft, die für das jeweilige Kabel 1 bzw. das Kabelende des Kabels 1 spezifisch vorgegeben sein kann, erreicht oder überschritten wird. Entsprechendes gilt auch, wenn eine andere definierte Kraft nicht erreicht bzw. nicht überschritten werden darf.

Fig. 5 und Fig. 6 zeigen jeweils noch Laschen, die an dem Gehäusedeckel 16 befestigt sind und mit denen der Gehäusedeckel 16 an dem Gehäuseboden befestigt werden kann; eine dieser Laschen ist in Fig. 5 mit dem Bezugszeichen '31' ausgewiesen.

### BEZUGSZEICHENLISTE

- 1: Kabelende eines Kabels
- 2: Gehäuse
- 3: Griffteil
- 4: Exzenter
- 5: Klemmkörper
- 6: Außenkante
- 7: Beschichtung
- 8: Nut
- 9: abgewinkelter Vorsprung des Gehäuses 2
- 10: Lagerzapfen
- 11: Anschlagabschnitt
- 12: Exzenterfeder
- 13: erster Gehäuseabschnitt
- 14: zweiter Gehäuseabschnitt
- 15: Gehäuseboden
- 16: Gehäusedeckel
- 17: Abdeckplatte
- 18: Sichtfenster
- 19: Hinterkante des ersten Gehäuseabschnitts 13
- 20: Vorderkante des Griffteils 3
- 21: Spalt
- 22: Endabschnitt Stift
- 23: Endabschnitt des ersten Gehäuseabschnitts 13
- 24: Federelement
- 25: Mitnehmer
- 26: Mikroschalter
- 27: Luftspalt
- 28: Stellschraube
- 29: Stößel
- 30: Markierung
- 31: Lasche

## Patentansprüche

1. Kabelzughilfe zum Ausrichten eines gehaltenen Kabels (1) in einer Zugrichtung, umfassend ein Gehäuse (2) und ein Griffteil (3),
wobei an dem Gehäuse (2) ein Exzenter (4) mit einem exzentrisch gelagerten Klemmkörper (5) angeordnet ist, um in einer Klemmstellung das Kabel (1) gegen das Gehäuse (2) verspannt zu klemmen,
**dadurch gekennzeichnet, dass** in der Klemmstellung das Griffteil (3) in Bezug auf das Gehäuse (2) zwischen einer Arbeitsstellung und einer Warnstellung verschiebbar angeordnet ist, und
wobei in der Warnstellung ein Warnsignal generiert wird, sobald eine definierte Kraft in Zugrichtung überschritten wird.

2. Kabelzughilfe nach Anspruch 1, wobei das Griffteil (3) gegen die Vorspannung eines Federelements (24) verschiebbar ist.

3. Kabelzughilfe nach Anspruch 2, wobei die Vorspannung des Federelements (24) einstellbar ist.

4. Kabelzughilfe nach Anspruch 2 oder 3, wobei das Federelement (24) als Schraubendruckfeder ausgebildet ist.

5. Kabelzughilfe nach einem der Ansprüche 2 bis 4, weiter umfassend einen Mitnehmer (25), der mit dem Griffteil (3) fest verbunden ist, wobei das Federelement (24) auf den Mitnehmer (25) einwirkt.

6. Kabelzughilfe nach Anspruch 5, wobei der Mitnehmer (25) in dem Gehäuse (2), insbesondere zwischen einem Gehäusedeckel (16) und einem Gehäuseboden (15), angeordnet ist.

7. Kabelzughilfe nach Anspruch 5 oder 6, wobei der Mitnehmer (25) einen Mikroschalter (26) betätigt oder freigibt, um das Warnsignal zu generieren.

8. Kabelzughilfe nach einem der Ansprüche 1 bis 7, weiter umfassend einen Signalgeber, der innerhalb des Gehäuses (2) angeordnet ist, und wobei der Signalgeber das Warnsignal generiert.

9. Kabelzughilfe nach einem der Ansprüche 1 bis 8, wobei das Gehäuse (2) abschnittsweise durch einen Gehäusedeckel (16) verschlossen ist, und wobei das Griffteil (3) abschnittsweise auf dem Gehäusedeckel (16) gleitend geführt ist.

10. Kabelzughilfe nach einem der Ansprüche 1 bis 9, wobei der exzentrisch gelagerte Klemmkörper (5) an einer Außenseite des Gehäuses (2) mittels einer Exzenterfeder (12) gegen einen Wandabschnitt (11) des Gehäuses (2) beaufschlagt ist.

## Claims

1. Cable traction aid for aligning a held cable (1) in a pulling direction, comprising a housing (2) and a handle part (3), wherein an eccentric (4) having an eccentrically mounted clamping body (5) is arranged on the housing (2) in order, in a clamping position, to clamp the cable (1) in a manner braced against the housing (2), **characterized in that**, in the clamping position, the handle part (3) is arranged displaceably with respect to the housing (2) between a working position and a warning position, and wherein, in the warning position, a warning signal is generated as soon as a defined force in the pulling direction is exceeded.

2. Cable traction aid according to Claim 1, wherein the handle part (3) is displaceable counter to the pretensioning of a spring element (24).

3. Cable traction aid according to Claim 2, wherein the pretensioning of the spring element (24) is adjustable.

4. Cable traction aid according to Claim 2 or 3, wherein the spring element (24) is in the form of a helical compression spring.

5. Cable traction aid according to one of Claims 2 to 4, furthermore comprising a driver (25) which is fixedly connected to the handle part (3), wherein the spring element (24) acts on the driver (25).

6. Cable traction aid according to Claim 5, wherein the driver (25) is arranged in the housing (2), in particular between a housing cover (16) and a housing base (15).

7. Cable traction aid according to Claim 5 or 6, wherein the driver (25) actuates or enables a microswitch (26) to generate the warning signal.

8. Cable traction aid according to one of Claims 1 to 7, furthermore comprising a signal transmitter which is arranged within the housing (2), and wherein the signal transmitter generates the warning signal.

9. Cable traction aid according to one of Claims 1 to 8, wherein the housing (2) is closed in certain sections by a housing cover (16), and wherein the handle part (3) is guided in a sliding manner in certain sections on the housing cover (16).

10. Cable traction aid according to one of Claims 1 to 9, wherein the eccentrically mounted clamping body (5) on an outer side of the housing (2) is applied against a wall portion (11) of the housing (2) by means of an eccentric spring (12).

## Revendications

1. Auxiliaire de traction de câble destiné à orienter un câble tenu (1) dans une direction de traction, ledit auxiliaire comprenant un boîtier (2) et une partie de préhension (3),
un excentrique (4) pourvu d'un corps de serrage (5) monté de manière excentrique étant disposé sur le boîtier (2) pour serrer le câble (1) dans une position de serrage de manière précontrainte contre le boîtier (2),
**caractérisé en ce que**
dans la position de serrage, la partie de préhension (3) est disposée de manière déplaçable par rapport au boîtier (2) entre une position de travail et une position d'avertissement, et
dans la position d'avertissement, un signal d'avertissement étant généré dès qu'une force définie dans le sens de traction est dépassée.

2. Auxiliaire de traction de câble selon la revendication 1, la partie de préhension (3) pouvant être déplacée en s'opposant à la précontrainte d'un élément à ressort (24).

3. Auxiliaire de traction de câble selon la revendication 2, la précontrainte de l'élément à ressort (24) étant réglable.

4. Auxiliaire de traction de câble selon la revendication 2 ou 3, l'élément à ressort (24) étant conçu sous la forme d'un ressort de compression hélicoïdal.

5. Auxiliaire de traction de câble selon l'une des revendications 2 à 4, comprenant en outre un entraîneur (25) qui est relié de manière fixe à la partie de préhension (3), l'élément à ressort (24) agissant sur l'entraîneur (25).

6. Auxiliaire de traction de câble selon la revendication 5, l'entraîneur (25) étant disposé dans le boîtier (2), en particulier entre un couvercle de boîtier (16) et un fond de boîtier (15).

7. Auxiliaire de traction de câble selon la revendication 5 ou 6, l'entraîneur (25) activant ou libérant un micro-commutateur (26) pour générer le signal d'avertissement.

8. Auxiliaire de traction de câble selon l'une des revendications 1 à 7, comprenant en outre un générateur de signal qui est disposé à l'intérieur du boîtier (2), et le générateur de signal générant le signal d'avertissement.

9. Auxiliaire de traction de câble selon l'une des revendications 1 à 8, le boîtier (2) étant fermé par portions par un couvercle de boîtier (16), et la partie de préhension (3) étant guidée de manière coulissante par portions sur le couvercle de boîtier (16).

10. Auxiliaire de traction de câble selon l'une des revendications 1 à 9, le corps de serrage monté de manière excentrique (5) étant sollicité contre une portion de paroi (11) du boîtier (2) sur un extérieur du boîtier (2) au moyen d'un ressort excentrique (12).
